(19) Europäisches Patentamt
European Patent Office
Office européen des brevets

(11) **EP 4 328 505 A1**

(12) # EUROPEAN PATENT APPLICATION
published in accordance with Art. 153(4) EPC

(43) Date of publication:
**28.02.2024 Bulletin 2024/09**

(21) Application number: **22862688.3**

(22) Date of filing: **06.05.2022**

(51) International Patent Classification (IPC):
**F24F 11/00** (2018.01)

(86) International application number:
**PCT/CN2022/091246**

(87) International publication number:
**WO 2023/029545 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021 CN 202111034255**

(71) Applicants:
• **Shanghai Kong Intelligent Building Co., Ltd
Shanghai 200080 (CN)**
• **GD Midea Heating & Ventilating Equipment Co.,
Ltd.
Foshan, Guangdong 528311 (CN)**

(72) Inventors:
• **LI, Yuanyang
Shanghai 200080 (CN)**
• **FANG, Xing
Shanghai 200080 (CN)**
• **WANG, Cong
Shanghai 200080 (CN)**
• **HUANG, Manning
Shanghai 200080 (CN)**
• **LIANG, Rui
Shanghai 200080 (CN)**
• **YAN, Jie
Shanghai 200080 (CN)**

(74) Representative: **RGTH
Patentanwälte PartGmbB
Neuer Wall 10
20354 Hamburg (DE)**

(54) **CENTRAL AIR CONDITIONING SYSTEM PROCESSING METHOD AND APPARATUS AND ELECTRONIC DEVICE**

(57) The present application provides a method for central air-conditioning system processing and apparatus and an electronic device. The method includes: obtaining operating temperature data of a central air-conditioning system, and determining a load of the central air-conditioning system on the basis of the operating temperature data; determining operating state data of equipment of the central air-conditioning system; and inputting the load and the operating state data of the central air-conditioning system into an energy efficiency evaluation model, and outputting the energy consumption and/or the energy efficiency of the central air-conditioning system. According to the method, an energy efficiency level of the air-conditioning system can be relatively accurately evaluated by utilizing rated parameters of the equipment and a small quantity of acquired data, such that the accuracy of the energy efficiency calculation of the central air-conditioning system is improved.

```
obtaining operating temperature data of the central air-
conditioning system, and determining a load of the central air-      S102
conditioning system based on the operating temperature data

                              ↓

determining operating state data of each equipment in the             S104
central air-conditioning system

                              ↓

inputting the load and the operating state data of the central        S106
air-conditioning system into an energy efficiency evaluation
model, and outputting an energy consumption and/or energy
efficiency of the central air-conditioning system
```

FIG. 1

EP 4 328 505 A1

**Description**

**CROSS-REFERENCE TO RELATED APPLICATIONS**

This application claims the benefit of Chinese patent application No. 202111034255.6 filed on September 3, 2021, titled "Method for Central Air-conditioning System Processing and Apparatus and Electronic Device", the entire contents of which are incorporated herein by reference.

**TECHNICAL FIELD**

The present application relates to the technical field of air conditioners, and in particular, to a method for central air-conditioning system processing, an apparatus and an electronic device.

**BACKGROUND**

The energy consumption of HVAC systems in public buildings generally accounts for more than 50% of the total energy consumption of the building, making them veritable energy consumers. Therefore, the energy saving of HVAC systems is of great significance to building energy conservation. At present, the majority of HVAC systems in public buildings are not equipped centralized monitoring systems, or with monitoring systems but the data not effectively recorded, which results in obstacles for assessing the actual energy efficiency levels and energy-saving potential of HVAC systems.

The energy efficiency evaluation in related technologies is to connect to the existing building management system (BMS), collect operating data for a certain period of time through the BMS, and calculate the operating energy efficiency of the HVAC system. However, the BMS data quality of most public buildings is poor and the accuracy of energy efficiency calculations cannot be guaranteed.

**SUMMARY**

In view of the above, the present application provides a method for central air-conditioning system processing, an apparatus and an electronic device to improve the accuracy of energy efficiency calculation and accurately evaluate the energy efficiency level of the central air-conditioning system.

Some embodiments of the present application provide a method for central air-conditioning system processing. The method may include: obtaining operating temperature data of the central air-conditioning system, and determining a load of the central air-conditioning system based on the operating temperature data; determining operating state data of each equipment in the central air-conditioning system; inputting the load and the operating state data of the central air-conditioning system into an energy efficiency evaluation model, and outputting an energy consumption and/or energy efficiency of the central air-conditioning system.

In an optional embodiment of the present application, a heat meter may be provided on a chilled water main pipe of the above-mentioned central air-conditioning system; and the step of obtaining the operating temperature data of the central air-conditioning system may include: obtaining the operating temperature data of the central air-conditioning system acquired by the heat meter.

In an optional embodiment of the present application, the above-mentioned heat meter may be an ultrasonic heat meter.

In an optional embodiment of the present application, a building in which the central air-conditioning system is installed may be equipped with a building management system; and the step of obtaining the operating temperature data of the central air-conditioning system may include: obtaining the operating temperature data of the central air-conditioning system acquired by the building management system.

In an optional embodiment of the present application, the above-mentioned operating temperature data may include: a chilled water inlet temperature and a chilled water outlet temperature; and the step of determining the load of the central air-conditioning system based on the operating temperature data may include: determining the load of the central air-conditioning system through the following formula: $Q = c \times M_{ch,des} \times (T_{chw,in} - T_{chw,out})$; where $Q$ is the load of the central air-conditioning system, $c$ is a specific heat of water, $M_{Ch,des}$ is a rated flow rate of a chiller in the central air-conditioning system, $T_{Chw,in}$ is the chilled water inlet temperature, and $T_{chw,out}$ is the chilled water outlet temperature.

In an optional embodiment of the present application, the above-mentioned operating temperature data may include: a chilled water outlet temperature; the above-mentioned step of determining the load of the central air-conditioning system based on the operating temperature data may include: obtaining an outdoor wet-bulb temperature; and inputting the outdoor wet-bulb temperature and the chilled water outlet temperature into a load prediction model, and outputting the load of the central air-conditioning system.

In an optional embodiment of the present application, the above-mentioned step of determining the load of the central air-conditioning system based on the operating temperature data may include: determining a load of each chiller of the central air-conditioning system through the following formula: $Q_{ch,i} = \frac{\frac{1}{\sqrt{S_i}}}{\sum_{i=1}^{k} \frac{1}{\sqrt{S_i}}}$ ; where $Q_{ch,i}$ is the load of an $i^{th}$ chiller, $S_i$ is a pipe network resistance coefficient of the $i^{th}$ chiller, and k is a total number of chillers in the central air-conditioning system.

In an optional embodiment of the present application, the above-mentioned step of determining the operating state data of each equipment in the central air-conditioning system may include: obtaining an image of an equipment state indicator of the central air-conditioning system acquired by a camera equipment, where an operating state of the equipment corresponds to the color of the equipment state indicator; performing an image recognition process on the image to obtain the operating state data of each equipment in the central air-conditioning system.

In an optional embodiment of the present application, electromechanical equipment of the central air-conditioning system may be equipped with a high-voltage control cabinet, and the equipment state indicator may be installed on a door of the control cabinet.

In an optional embodiment of the present application, the above-mentioned camera equipment may be installed on a wall opposite the control cabinet of the central air-conditioning system, or the camera equipment may be installed on a ceiling of a center aisle of the control cabinets of the central air-conditioning system.

In an optional embodiment of the present application, the above-mentioned energy efficiency evaluation model may include an energy consumption evaluation sub-model and an energy efficiency evaluation sub-model; the step of inputting the load and operating state data of the central air-conditioning system into the energy efficiency evaluation model, and outputting the energy consumption and/or energy efficiency of the central air-conditioning system may include: inputting the operating state data of the central air-conditioning system into the energy consumption evaluation sub-model, and outputting the energy consumption of the central air-conditioning system under operating conditions corresponding to the operating state; and/or inputting the load and energy consumption into the energy efficiency evaluation sub-model, and outputting the energy efficiency of the central air-conditioning system.

In an optional embodiment of the present application, the above-mentioned step of inputting the operating state data of the central air-conditioning system into the energy consumption evaluation sub-model and outputting the energy consumption of the central air-conditioning system under the operating conditions corresponding to the operating state may include:

Determining an actual power of chilled water pumps by the energy consumption evaluation sub-model through the following formula: $P_{chw} = \sum_{i=1}^{l} P_{chw,des,i} \times N_{chw,i}$ ; where, $P_{chw}$ is the actual power of the chilled water pumps, $P_{chw,des,i}$ is a rated power of $i^{th}$-typed chilled water pumps, $N_{chw,i}$ is the number of the $i^{th}$-typed chilled water pumps in operation, and l is the number of types of the chilled water pumps; determining an actual power of condenser water pumps by the energy consumption evaluation sub-model through the following formula: $P_{cdw} = \sum_{i=1}^{m} P_{cdw,des,i} \times N_{cdw,i}$ ; where, $P_{cdw}$ is the actual power of the condenser water pumps, $P_{cdw,des,i}$ is a rated power of $i^{th}$-typed condenser water pumps, $N_{cdw,i}$ is the number of the $i^{th}$-typed condenser water pumps in operation, and m is the number of types of the condenser water pumps; determining an actual power of cooling towers by the energy consumption evaluation sub-model through the following formula: $P_{ct} = \sum_{i=1}^{n} P_{ct,des,i} \times N_{ct,i}$ , where $P_{ct}$ is the actual power of the cooling towers, $P_{ct,des,i}$ is a rated power of $i^{th}$-typed cooling towers, $N_{ct,i}$ is the number of the $i^{th}$-typed cooling towers in operation, and n is the number of types of the cooling towers; determining an actual power of the chillers by the energy consumption evaluation sub-model through the following formula: $P_{ch} = \sum_{i=1}^{r} f(Q_{ch,i}, T_{wb})$ , where $P_{ch}$ is the actual power of the chillers, $Q_{ch,i}$ is a load of an $i^{th}$ chiller; $T_{wb}$ is the outdoor wet-bulb temperature, and r is the number of types of the chillers; determining the energy consumption of the central air-conditioning system by the energy consumption evaluation sub-model through the following formula: $P_{sys} = P_{ch} + P_{chw} + P_{cdw} + P_{ct}$ ; and determining the energy consumption of the central air-conditioning system under the operating conditions corresponding to the operating state by the energy consumption evaluation sub-model based on the energy consumption and operating state of the central air-conditioning system.

In an optional embodiment of the present application, the above-mentioned step of inputting the load and the energy consumption of the central air-conditioning system into the energy efficiency evaluation sub-model and outputting the energy efficiency of the central air-conditioning system includes: determining the energy efficiency of the central air-conditioning system by the energy efficiency evaluation sub-model through the following formula: $COP_{sys} = \frac{Q}{P_{sys}}$ ;

where $COP_{sys}$ is the energy efficiency of the central air-conditioning system, Q is the load of the central air-conditioning system, and $P_{sys}$ is the energy consumption of the central air-conditioning system.

In an optional embodiment of the present application, after the above step of outputting the energy consumption and the energy efficiency of the central air-conditioning system, the central air-conditioning system processing method may also include: adjusting, if the energy efficiency of the central air-conditioning system is less than a preset threshold, the operating state of each equipment in the central air-conditioning system.

Some other embodiments of the present application also provide a central air-conditioning system processing apparatus, which may include: an operating temperature data acquisition module configured to obtain operating temperature data of the central air-conditioning system, and determine a load of the central air-conditioning system based on the operating temperature data; an operating state data determination module configured to determine operating state data of each equipment of the central air-conditioning system; and an energy efficiency output module configured to input the load and operating state data of the central air-conditioning system into an energy efficiency evaluation model and output energy consumption and/or energy efficiency of central air-conditioning system.

Yet some other embodiments of the present application also provide an electronic device, including a processor and a memory. The memory stores a computer-executable instruction that can be executed by the processor, and the processor executes the computer-executable instruction to implement the above central air-conditioning system processing method.

Still yet some embodiments of the present application also provide a computer-readable storage medium, which stores a computer-executable instruction, and the computer-executable instruction, when called and executed by a processor, prompts the processor to implement the above central air-conditioning system processing method.

The embodiments of the present application at least have the following advantageous effects:
The central air-conditioning system processing method, apparatus and electronic device provided by the embodiments of the present application determine the load of the central air-conditioning system based on the obtained operating temperature data of the central air-conditioning system, and input the load of the air-conditioning system and the obtained operating state data of each equipment into the energy efficiency evaluation model, and output the energy consumption and/or energy efficiency of the central air-conditioning system. The present method allows to more accurately evaluate the energy efficiency level of the air-conditioning system, thereby improving the accuracy of the energy efficiency calculation of the central air-conditioning system, by utilizing the rated parameters and a small amount of collected data of the equipment.

Other features and advantages of the present application will be set forth in the subsequent description, or some of the features and advantages can be inferred or determined without doubt from the description, or can be learned by implementing the above-mentioned technology of the present application.

In order to make the above-mentioned objects, features and advantages of the present application more obvious and understandable, preferred embodiments are given and described in detail below with reference to the accompanying drawings.

**BRIEF DESCRIPTION OF THE DRAWINGS**

In order to more clearly illustrate the technical proposals in embodiments of the present application or related art, accompanying drawings that are used in the description of the embodiments or related art are briefly introduced hereinbelow. Apparently, the drawings in the following description are merely some embodiments of the present application. For those skilled in the art, other drawings can also be obtained according to these drawings without any creative effort.

FIG. 1 is a flow chart of a central air-conditioning system processing method provided by an embodiment of the present application;

FIG. 2 is a flow chart of another central air-conditioning system processing method provided by an embodiment of the present application;

FIG. 3 is a schematic diagram of a heat meter installation method provided by an embodiment of the present application;

FIG. 4 is a schematic diagram of the principle of the chilled water side of an air-conditioning plant room provided by an embodiment of the present application;

FIG. 5 is a schematic diagram of a high-voltage control cabinet for equipment provided by an embodiment of the present application;

FIG. 6 is a schematic diagram of a network camera installation method provided by an embodiment of the present application;

FIG. 7 is a schematic diagram of another network camera installation method provided by an embodiment of the present application;

FIG. 8 is a schematic diagram of processing modules of a central air-conditioning system provided by an embodiment of the present application;

FIG. 9 is a schematic diagram of processing modules of another central air-conditioning system provided by the embodiment of the present application;

FIG. 10 is a schematic structural diagram of a central air-conditioning system processing apparatus provided by an embodiment of the present application;

FIG. 11 is a schematic structural diagram of another central air-conditioning system processing apparatus provided by an embodiment of the present application; and

FIG. 12 is a schematic structural diagram of an electronic device provided by an embodiment of the present application.

## DETAILED DESCRIPTION OF THE EMBODIMENTS

In order to make the purpose, technical proposals, and advantages of the present application more clearly understood, the present application will be described in further detail hereinbelow with reference to the accompanying drawings. Apparently, the embodiments described herein are part of the embodiments of the present application, but not all of them. All other embodiments obtained by those of ordinary skill in the art, based on the embodiments of the present application, without creative efforts fall within the scope of protection of the present application.

At present, the energy efficiency evaluation method in related technologies collects operating data over a certain period of time through BMS to calculate the operating energy efficiency of the HVAC system. However, the BMS data quality of most public buildings is poor and the accuracy of energy efficiency calculations cannot be guaranteed. Based on this, embodiments of the present application provide a central air-conditioning system processing method, apparatus and electronic device, and the method is applied to the server of the central air-conditioning system, and specifically relates to an air-conditioning system energy-saving diagnosis method based on image recognition.

In order to facilitate understanding of the embodiments, a central air-conditioning system processing method disclosed in an embodiment of the present application is first introduced in detail.

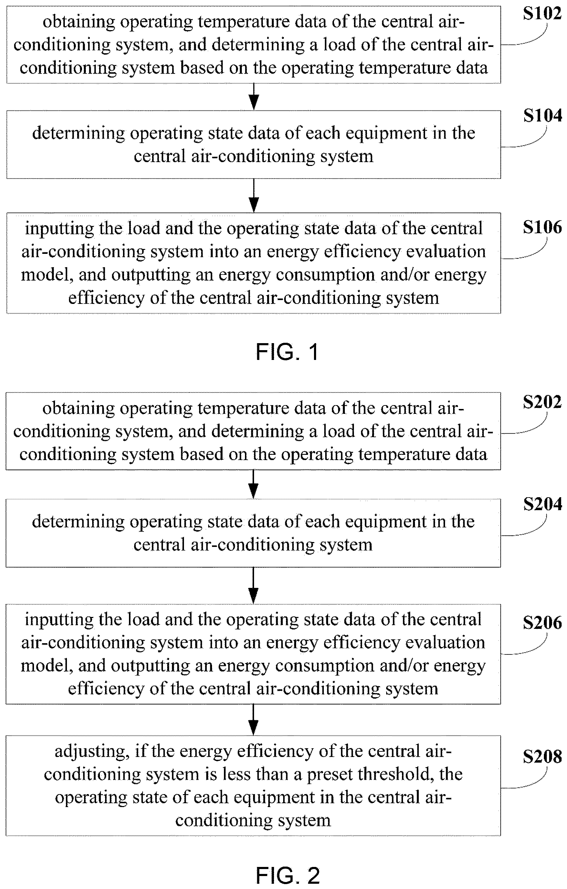

An embodiment of the present application provides a central air-conditioning system processing method. Referring to the flow chart of the central air-conditioning system processing method shown in FIG. 1, the central air-conditioning system processing method may include the following steps S102-S106:

In step S102: an operating temperature data of the central air-conditioning system is obtained, and a load of the central air-conditioning system is determined based on the operating temperature data.

The method provided in this embodiment can be applied to an independent control device, such as a server of a central air conditioner, or a control module of any other device (including the central air conditioner), which is not limited in this embodiment.

The central air-conditioning system in this embodiment may be an HVAC system, and the method provided in this embodiment may be applied to a server. The server may be a physical server or a cloud server, which is not limited in this embodiment.

The operating temperature data of the central air-conditioning system may at least include: the inlet water temperature and the return water temperature of each equipment in the central air-conditioning system, and the types of the equipment in the central air-conditioning system in this embodiment may include: a chiller, a chilled water pump, a condenser water pump and a cooling tower. The load of the central air-conditioning system in this embodiment may include the cooling capacity of each equipment in the central air-conditioning system, or may include the total cooling capacity of respective equipment in the central air-conditioning system.

In step S104: the operating state data of each equipment of the central air-conditioning system is determined.

The operating state of the central air-conditioning system in this embodiment may include: a working state, a fault state, a standby state, and the like. The operating state data in this embodiment may be expressed in the form of digital quantities, for example: 1 represents the working state, 0 represents the fault state, etc.

In step S106, the load and operating state data of the central air-conditioning system are inputted into an energy efficiency evaluation model, and the energy consumption and/or energy efficiency of the central air-conditioning system is outputted.

The energy efficiency evaluation model may be pre-trained and set in the server to evaluate the energy efficiency of the central air-conditioning system. The energy efficiency evaluation model may also include an energy consumption evaluation model. The energy consumption evaluation model is configured to evaluate the energy consumption of the central air-conditioning system. The energy consumption evaluation model and the energy efficiency evaluation model may be integrated into a neural network model, which is not limited in this embodiment. In this embodiment, the energy consumption and energy efficiency of the central air-conditioning system can be outputted through both of the energy consumption evaluation model and the energy efficiency evaluation model, or the energy consumption of the central air-conditioning system alone can be outputted through the energy consumption evaluation model, or the energy efficiency of the central air-conditioning system alone can be outputted through the energy efficiency evaluation model, which is not limited in this embodiment.

In addition, in this embodiment, rated parameters of the equipment may also be inputted into the energy consumption evaluation model and the energy efficiency evaluation model to assist in calculating the energy consumption and energy efficiency of the central air-conditioning system.

In the embodiment of the present application of a central air-conditioning system processing method, the load of the central air-conditioning system is determined based on the acquired operating temperature data of the central air-conditioning system, and the load of the air-conditioning system and the acquired operating state data of each equipment in the central air-conditioning system is inputted into the energy efficiency evaluation model, so that the energy consumption and/or energy efficiency of the central air-conditioning system can be outputted. In the present method, the rated parameters of the equipment and a limited amount of collected data can be used to more accurately evaluate the energy efficiency level of the air-conditioning system, thereby improving the accuracy of the energy efficiency calculation of the central air-conditioning system.

Another embodiment of the present application provides another central air-conditioning system processing method, which is implemented on the basis of the above embodiment. As shown in the flow chart of another central air-conditioning system processing method in FIG. 2, the central air-conditioning system processing method in the present embodiment may include the following steps S202-S208:

In Step S202: an operating temperature data of the central air-conditioning system is obtained, and a load of the central air-conditioning system is determined based on the operating temperature data.

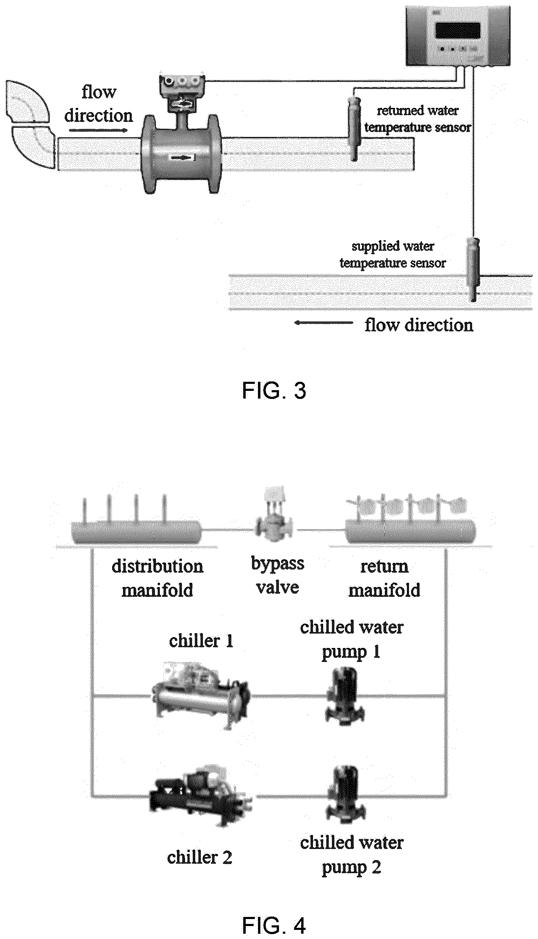

For an air-conditioning plant room where on-site installation and construction conditions are allowed, referring to the schematic diagram of a heat meter installation method shown in FIG. 3, a heat meter may be arranged on the chilled water main pipe of the central air-conditioning system. The heat meter can communicate with a server if the method provided in this embodiment is applied to the server. A real-time total load of the central air-conditioning system is obtained by installing a heat meter on the chilled water main pipe, for example, the operating temperature data of the central air-conditioning system collected by the heat meter is obtained.

The heat meter can obtain parameters such as a chilled water inlet temperature (also referred to as a chilled water supply temperature), a chilled water outlet temperature (also referred to as a chilled water return temperature), a total chilled water flow rate, and the like, as the operating temperature data. A wireless communication gateway is installed on site, and the real-time data collected by the heat meter can be uploaded to the cloud platform (i.e., the server in this embodiment) for calculation of the air-conditioning system energy consumption evaluation model and energy efficiency evaluation model. In order to facilitate on-site construction, the heat meter is preferably an external clamp-on ultrasonic heat meter.

For an air-conditioning room where on-site installation and construction conditions are not allowed, and if the building where the central air-conditioning system is installed is equipped with a building management system (BMS), the operating temperature data collected by the on-site BMS may be exported or recorded, for example, the operating temperature data of the central air-conditioning system collected by the building management system may be obtained.

Specifically, the operating temperature data may include: a chilled water inlet temperature and a chilled water outlet temperature. The load of the central air-conditioning system may be determined through the following formula: $Q = c \times M_{ch,des} \times (T_{chw,in} - T_{chw,out})$; where, $Q$ is the load of the central air-conditioning system, and c is the specific heat of water, $M_{ch,des}$ is a rated flow rate of the chiller of the central air-conditioning system, $T_{chw,in}$ is the chilled water inlet temperature, and $T_{chw,out}$ is the chilled water outlet temperature.

It should be noted here that Q can be understood as the total load of the air-conditioning system, that is, the sum of the loads of each equipment in the central air-conditioning system. The rated flow rate of the chiller can be obtained directly from the nameplate of each equipment.

After obtaining the operating temperature data, the load of the central air-conditioning system may be determined through the following steps: obtaining an outdoor wet-bulb temperature; inputting the outdoor wet-bulb temperature and the chilled water outlet temperature into the pre-trained load prediction model, and outputting the load of the central air-conditioning system.

The outdoor wet-bulb temperature can be obtained from the meteorological database or by measurements; the load of the central air-conditioning system may be determined by the load prediction model through the following formula: $Q = f(T_{wb}, T_{chw,out})$; where $Q$ is the load of the central air-conditioning system, $T_{wb}$ is the outdoor wet-bulb temperature, and $T_{chw,out}$ is the chilled water outlet temperature.

The load prediction model including the load of the air-conditioning system, the outdoor wet-bulb temperature, and the chilled water outlet temperature may be established based on the historical operating temperature data collected by the BMS: $Q = f(T_{wb}, T_{chw,out})$.

The specific form of the above load prediction model may be obtained by linear regression, ridge regression, Lasso regression and the like. The outdoor wet-bulb temperature data may be obtained from the meteorological database through an application programming interface (API).

By establishing a load prediction model between the load of the air-conditioning system, the outdoor wet-bulb temperature, and the chilled water outlet temperature, the real-time load of the air-conditioning system can be more accurately predicted based on the limited data collected.

In addition, on the basis of using the above method to obtain the total load of the air-conditioning system, the load of each equipment of the air-conditioning system can be further obtained. For example, the load of each chiller of the central air-conditioning system can be determined through the following formula:

$$Q_{ch,i} = \frac{\frac{1}{\sqrt{S_i}}}{\sum_{i=1}^{k} \frac{1}{\sqrt{S_i}}}$$

; where, $Q_{ch,i}$ is the load of an $i^{th}$ chiller, $S_i$ is the pipe network resistance coefficient of the $i^{th}$ chiller, and $k$ is the total number of chillers in the central air-conditioning system.

Referring to the schematic diagram of the principle of the chilled water side of an air-conditioning plant room shown in FIG. 4, each chiller is connected in series and switched on and off simultaneously with a chilled water pump. Assuming there are k chillers running at the same time, the relationship between the total load of the air-conditioning system and the load of each chiller is as follows: $Q = \sum_{i=1}^{k} Q_{ch,i} = \sum_{i=1}^{k} (c \times M_{ch,i} \times \Delta T_{ch,i})$ ; where $Q_{ch,i}$ is the load of an $i^{th}$ chiller, $M_{ch,i}$ is a rated flow rate of the $i^{th}$ chiller (obtained from the equipment nameplate), and $\Delta T_{ch,i}$ is the difference between the supply and return water temperature of the $i^{th}$ chiller.

Since the difference between the supply and return water of each chiller is the same, the above formula can be transformed into: $Q = c \times \Delta T_{ch} \times \sum_{i=1}^{k} M_{ch,i}$ .

The rated range $H_i$ and the rated flow rate $M_{ch,i}$ of a single chilled water pump i under the rated conditions is as follows: $H_i = S_i \times M_{ch,i}^2$ ; where $S_i$ is the pipe network resistance coefficient, which can be calculated from the rated parameters of the water pump.

When the chillers operate in parallel, the rated range of each water pump is the same, thus:

$$S_1 \times M_{ch,1}^2 = S_2 \times M_{ch,2}^2 = S_3 \times M_{ch,3}^2 = \cdots$$

$$M_{ch,1} : M_{ch,2} : M_{ch,3} : \ldots = \frac{1}{\sqrt{S_1}} : \frac{1}{\sqrt{S_2}} : \frac{1}{\sqrt{S_3}} : \ldots$$

$$Q_{ch,1} : Q_{ch,2} : Q_{ch,3} : \ldots = \frac{1}{\sqrt{S_1}} : \frac{1}{\sqrt{S_2}} : \frac{1}{\sqrt{S_3}} : \ldots$$

$$Q_{ch,i} = \frac{\frac{1}{\sqrt{S_i}}}{\Sigma_{i=1}^{k} \frac{1}{\sqrt{S_i}}}$$

Therefore, the load of each chiller may be ;

$$Q_{ch,i} = \frac{Q}{k}$$

In particular, when all operating chillers are of the same model, the load of each chiller can be: .

In step S204: the operating state data of each equipment of the central air-conditioning system is determined.

In this embodiment, the operating state data of each equipment of the central air-conditioning system may be determined by utilizing image recognition, for example, obtaining an image of a equipment state indicator of the central air-conditioning system collected by a camera equipment; the operating state of the device of the central air-conditioning system corresponds to the color of the equipment state indicator; an image recognition process is performed on the image to obtain the operating state data of each equipment in the central air-conditioning system.

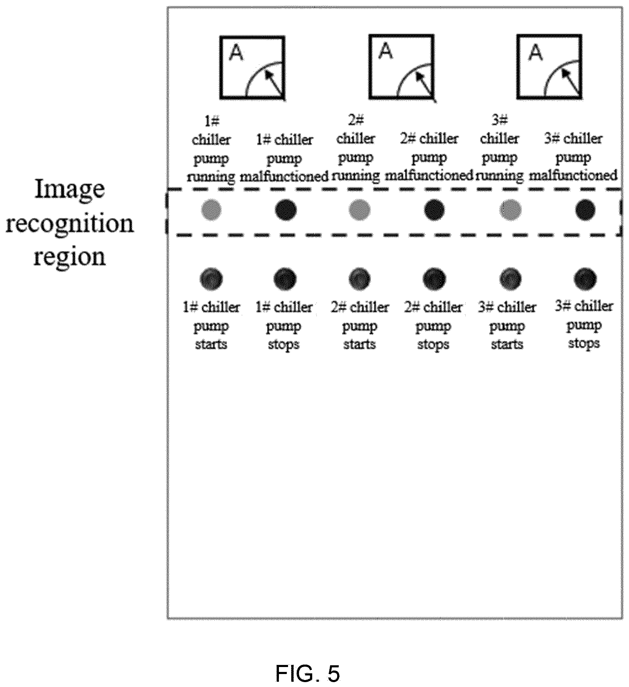

Referring to the schematic diagram of a high-voltage control cabinet for equipment shown in FIG. 5. The electromechanical equipment of the air-conditioning system is generally equipped with a corresponding high-voltage control cabinet. Conventionally, the state indicator of the equipment is installed on the door of the control cabinet, so that the real-time operating state of the equipment can be determined through the image of the state indicator taken by the camera equipment, and the real-time operating state can be outputted to the energy efficiency evaluation model in the cloud platform to calculate the operating energy efficiency of the equipment.

The camera equipment may be a network camera, and the network camera may be in the form of pan-tilt type, gun type, fisheye type, spheric type, hemispheric type, and the like. The network cameras can be used to realize image collection and recognition of the control cabinets. By installing the network cameras at appropriate locations in the power distribution room, all equipment control cabinets can be covered with the smallest possible number of the camera equipment.

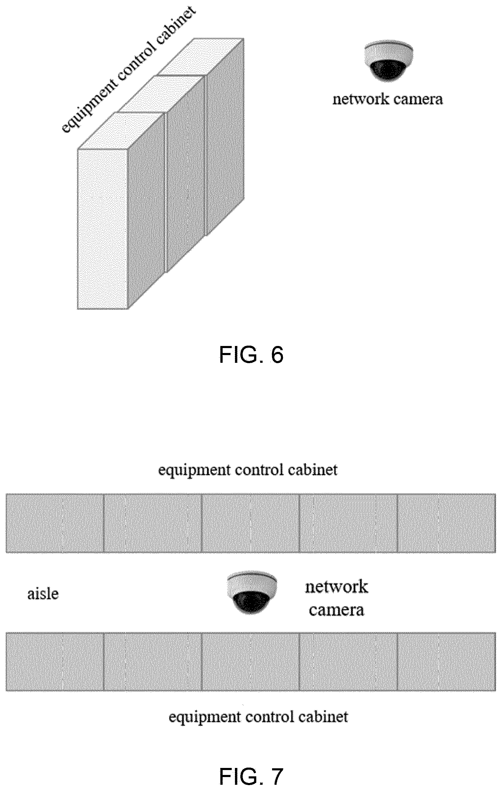

Referring to the schematic diagram of an installation method of the network camera shown in FIG. 6 and the schematic diagram of another installation method of the network camera shown in FIG. 7, the installation methods of the network camera can be divided into two types according to the layout of the high-voltage control cabinet: the camera equipment can be installed on the wall opposite the control cabinets of the central air-conditioning system, or the camera equipment can be installed on the ceiling of the center aisle of the control cabinets of the central air-conditioning system.

The control cabinets can be arranged against the wall, with the network camera installed on the other wall opposite the control cabinets; alternatively, the control cabinets can be arranged side by side, with the network camera installed on the ceiling of the aisle therebetween to ensure coverage of each control cabinet. The number of network cameras may be determined based on the number and layout of on-site equipment control cabinets.

In order to transmit the image signals acquired by the network camera to the cloud, a 4G/5G gateway may be provided on site which can be connected to the network camera through network bus. The video signal of the control cabinet acquired by the network camera may be compressed by a high-efficiency compression chip and transmitted to the cloud server through the gateway. The image recognition algorithm deployed on the cloud can identify the running/stop state of each equipment based on the acquired image and process the running/stop state of the equipment into digital quantities and transmits them to the energy consumption evaluation model and energy efficiency evaluation model of the air-conditioning system.

The embodiment of the present application proposes a method for identifying the operating state of the air-conditioning system based on image recognition, which determines the operating state of the air-conditioning system in real time by a network camera installed in the air-conditioning plant room.

In step S206: the load and operating state data of the central air-conditioning system is inputted into the energy efficiency evaluation model, and the energy consumption and/or energy efficiency of the central air-conditioning system is outputted.

In this embodiment, the energy consumption of the central air-conditioning system may also be measured. The energy efficiency evaluation model can measure both energy efficiency and energy consumption, and the energy efficiency evaluation model includes an energy consumption evaluation sub-model and an energy efficiency evaluation sub-model. The energy consumption of the central air-conditioning system may be measured through the following steps: inputting the operating state data of the central air-conditioning system into the energy consumption evaluation sub-model, and outputting the energy consumption of the central air-conditioning system under the operating conditions corresponding to the operating state; and/or inputting the load and energy consumption of the central air-conditioning system into the energy efficiency evaluation sub-model, and outputting the energy efficiency of the central air-conditioning system.

Specifically, the actual power of the chilled water pumps can be determined by the energy consumption evaluation sub-model through the following formula: $P_{chw} = \sum_{i=1}^{l} P_{chw,des,i} \times N_{chw,i}$ ; where, $P_{chw}$ is the actual power of the chilled water pumps, $P_{chw,des,i}$ is the rated power of i$^{th}$-typed chilled water pumps, and $N_{chw,i}$ is the number of the i$^{th}$-typed chilled water pumps in operation, and $l$ is the number of types of the chilled water pumps.

The actual power of the condenser water pumps can be determined by the energy consumption evaluation sub-model through the following formula: $P_{cdw} = \sum_{i=1}^{m} P_{cdw,des,i} \times N_{cdw,i}$ ; where, $P_{cdw}$ is the actual power of the condenser water pumps, $P_{cdw,des,i}$ is the rated power of i$^{th}$-typed condenser water pumps, $N_{cdw,i}$ is the number of the i$^{th}$-typed condenser water pumps in operation, and m is the number of types of the condenser water pumps.

The actual power of the cooling towers can be determined by the energy consumption evaluation sub-model through the following formula: $P_{ct} = \sum_{i=1}^{n} P_{ct,des,i} \times N_{ct,i}$ ; where, $P_{ct}$ is the actual power of the cooling towers, $P_{et,des,i}$ is the rated power of i$^{th}$-typed cooling towers, $N_{ct,i}$ is the number of the i$^{th}$-typed cooling towers in operation, and $n$ is the number of types of the cooling towers.

The actual power of the chillers can be determined by the energy consumption evaluation sub-model through the following formula: $P_{ch} = \sum_{i=1}^{r} f(Q_{ch,i}, T_{wb})$ ; where, $P_{ch}$ is the actual power of the chillers, $Q_{ch,i}$ is the load of i$^{th}$-typed chillers, $T_{wb}$ is the outdoor wet-bulb temperature, and r is the number of types of the chillers.

The energy consumption of the central air-conditioning system can be determined by the energy consumption evaluation sub-model through the following formula: $P_{sys} = P_{ch} + P_{chw} + P_{cdw} + P_{ct}$. The energy consumption of the central air-conditioning system under the operating conditions corresponding to the operating state is determined by the energy consumption evaluation sub-model based on the energy consumption and operating state of the central air-conditioning system.

The water-cooled central air-conditioning room in public buildings usually consists of four types of electromechanical equipment: chillers, chilled water pumps, condenser water pumps and cooling towers. For most air-conditioning rooms that require energy-saving renovation, each equipment operates at a fixed frequency. Through on-site survey of the nameplate parameters of the equipment, the rated power Pdes of the equipment can be known, so that the energy consumption evaluation sub-model of the chilled water pumps, the condenser water pumps and the cooling towers is established as follows:

$$P_{chw} = \sum_{i=1}^{l} P_{chw,des,i} \times N_{chw,i};$$

$$P_{cdw} = \sum_{i=1}^{m} P_{cdw,des,i} \times N_{cdw,i};$$

$$P_{ct} = \sum_{i=1}^{n} P_{ct,des,i} \times N_{ct,i};$$

where, $P_{chw}$ is the actual power of the chilled water pumps, $P_{chw,des,i}$ is the rated power of i$^{th}$-typed chilled water pumps, $N_{chw,i}$ is the number of the i$^{th}$ chilled water pumps in operation, $l$ is the number of types of chilled water pumps; $P_{cdw}$ is the actual power of the condenser water pumps, $P_{cdw,des,i}$ is the rated power of i$^{th}$-typed condenser water pumps, $N_{cdw,i}$ is the number of the i$^{th}$-typed condenser water pumps in operation, m is the number of types of condenser water pumps; $P_{ct}$ is the actual power of the cooling towers, $P_{et,des,i}$ is the rated power of i$^{th}$-typed cooling towers, $N_{ct,i}$ is the number of the i$^{th}$-typed cooling towers in operation, and $n$ is the number of types of cooling towers.

For fixed frequency chillers, the operating power thereof is primarily related to the air-conditioning load, chilled water outlet temperature and condenser water return temperature. When the air-conditioning system is in stable operation period, the chilled water outlet temperature is usually a fixed value (such as 7°C), and the difference between the condenser water return temperature and the outdoor wet-bulb temperature is also a fixed value (such as 3°C). Therefore, the energy consumption evaluation sub-model of a single chiller can be presented in the following form: $P_{ch,i} = f(Q_{ch,i}, T_{wb})$; where $P_{ch,i}$ is the actual power of an i$^{th}$ chiller, and $Q_{ch,i}$ is the load of the i$^{th}$ chiller.

The specific forms of each of the above energy consumption evaluation sub-models can also be obtained using linear regression, ridge regression, Lasso regression, and the like.

Based on the above energy consumption evaluation sub-model of air-conditioning equipment, the energy consumption evaluation sub-model and energy efficiency evaluation sub-model of the air-conditioning plant room can be

$$COP_{sys} = \frac{Q}{P_{sys}}$$

obtained as follows: $P_{sys} = P_{ch} + P_{chw} + P_{cdw} + P_{ct}$;

It can be seen that the energy consumption evaluation sub-model and energy efficiency evaluation sub-model of the air-conditioning plant room are only related to the load of the central air-conditioning system, the outdoor wet-bulb temperature and the operating state of the equipment. The load of the central air-conditioning system can be obtained by the method in the previous steps, and the outdoor wet-bulb temperature can be obtained from the meteorological database through the API, and the operating state of each equipment in the air-conditioning room can be obtained through the previous steps.

In step S208: the operating state of each equipment in the central air-conditioning system is adjusted if the energy efficiency of the central air-conditioning system is less than a preset threshold.

If the energy efficiency of the central air-conditioning system, $COP_{sys}$, is less than the preset threshold, this means that the central air-conditioning system has large room for energy saving improvement. Specifically, according to American Society of Heating, Refrigerating and Air-Conditioning Engineers (ASHRAE) standards, the above threshold may be set to 3.5.

The energy consumption evaluation model and energy efficiency evaluation model of the air-conditioning system can both be deployed on the cloud, using the cloud as a server. Based on the load data of the heat meter and monitoring images of the equipment control cabinet acquired on site, the cloud converts the monitoring images of the equipment control cabinet into the running/stop state data of the equipment through image recognition algorithms, and transmits them to the energy consumption evaluation model and energy efficiency evaluation model to obtain the real-time energy consumption and energy efficiency of the air-conditioning plant room.

The ultimate goal of the control of the air-conditioning system is to ensure the stability of the ambient temperature in the building. In order to acquire the indoor ambient temperature Tin, wireless temperature sensors are arranged in the building. The acquired temperature is transmitted to the cloud through the gateway. The set of operating parameters acquired by the cloud from the project site is: $\{T_{in}, T_{wb}, Q, N_{ch}, N_{chw}, N_{cdw}, N_{ct}\}$. Big data cluster analysis algorithms (such as K-means, DBSCAN, GMM, etc.) are deployed on the cloud to perform cluster analysis on the operating condition parameters of the air-conditioning system ($\{T_{in}, T_{wb}, Q\}$), and N groups of operating condition categories are obtained. In each group of operating condition categories, the set with the smallest number of operating equipment min $\{N_{ch}, N_{chw}, N_{cdw}, N_{ct}\}$ is selected as the energy-saving operating mode. When the actual number of operating equipment is greater than that min $\{N_{ch}, N_{chw}, N_{cdw}, N_{ct}\}$, it means that the operating mode has produced a waste of energy consumption, and the control strategy needs to be adjusted.

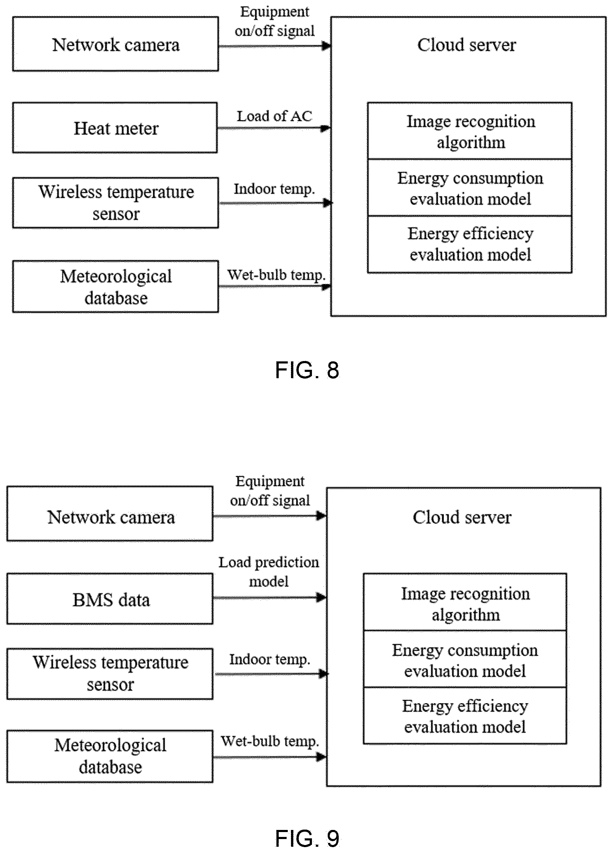

In summary, referring to the block diagram of the processing modules of a central air-conditioning system shown in FIG. 8 and the block diagram of the processing modules of another central air-conditioning system processing shown in FIG. 9, the operating state data of each equipment in the central air-conditioning system can be collected through a network camera, the operating temperature data of the central air-conditioning system can be collected through the heat meter or BMS and the load of the air-conditioning system can be calculated, the indoor temperature can be collected through a wireless temperature sensor, and the wet-bulb temperature can be obtained through the meteorological database. Based on the above data, the energy efficiency and energy consumption of the central air-conditioning system can be calculated through the image recognition algorithm, the energy consumption evaluation model and the energy efficiency evaluation model in the cloud server, and the operating state of each equipment of the central air-conditioning system can be adjusted based on the output results.

The above method provided by the embodiments of the present application aims at the problem of energy efficiency evaluation in the energy-saving renovation of the existing public building HVAC system, and proposes to use the equipment energy consumption evaluation model and the system operating state detection method to evaluate the energy efficiency of the HVAC system. The equipment energy consumption evaluation model includes the chiller energy consumption evaluation model, the chilled water pump energy consumption evaluation model, the condenser water pump energy consumption evaluation model and the cooling tower energy consumption evaluation model. The system operating state detection utilizes a network camera installed in the air-conditioning power distribution room to identify the operating state of the equipment in real time, which can be used as input to the equipment energy consumption evaluation model to calculate the energy efficiency of the system under different operating conditions.

This method proposes an energy-saving diagnosis method for an air-conditioning system based on image recognition. By installing a network camera in the air-conditioning plant room, the real-time operating state of the air-conditioning system is identified, and the energy efficiency of the room is calculated in combination with the energy consumption evaluation model of the air-conditioning equipment, so that evaluation of the energy efficiency level of the air-conditioning room is more accurate. The present application is capable of aiming a quick determination of the energy-saving renovation plan in the early stage of energy-saving renovation, and the implementation process is simple and the low-cost.

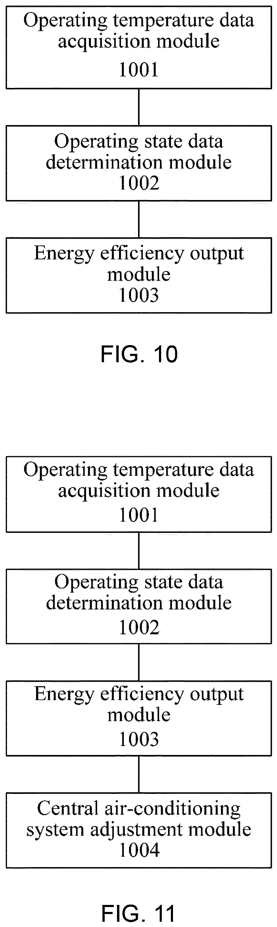

Another embodiment of the present application provides a central air-conditioning system processing apparatus corresponding to the above method, which is applied to the server of the central air-conditioning system. Referring to the structural schematic diagram of a central air-conditioning system processing apparatus shown in FIG. 10. The central air-conditioning system processing apparatus may include:

an operating temperature data acquisition module 1001 configured to obtain the operating temperature data of the central air-conditioning system, and determine the load of the central air-conditioning system based on the operating temperature data;

an operating state data determination module 1002 configured to determine the operating state data of each equipment in the central air-conditioning system; and

an energy efficiency output module 1003 configured to input the load and operating state data of the central air-conditioning system into the energy efficiency evaluation model, and output the energy consumption and/or energy efficiency of the central air-conditioning system.

The central air-conditioning system processing apparatus provided by the embodiment of the present application determines the load of the central air-conditioning system based on the acquired operating temperature data of the central air-conditioning system, and inputs the load of the air-conditioning system with the acquired operating state data of each equipment in the central air-conditioning system into the energy efficiency evaluation model, so that the energy consumption and/or energy efficiency of the central air-conditioning system can be outputted. In this method, the rated parameters of the equipment and a limited amount of collected data are used to more accurately evaluate the energy efficiency level of the air-conditioning system, thereby improving the accuracy of the energy efficiency calculation of the central air-conditioning system.

The chilled water main pipe of the above-mentioned central air-conditioning system may be provided with a heat meter, and the above-mentioned operating temperature data acquisition module is used to obtain the operating temperature data of the central air-conditioning system collected by the heat meter. The above-mentioned heat meter is an ultrasonic heat meter.

The above-mentioned building installed with the central air-conditioning system may be equipped with a building management system, and the above-mentioned operating temperature data acquisition module is used to obtain the operating temperature data of the central air-conditioning system collected by the building management system.

The above-mentioned operating temperature data may include: a chilled water inlet temperature and a chilled water outlet temperature. The above-mentioned operating temperature data acquisition module, configured to determine the load of the central air-conditioning system based on the operating temperature data, may include: determining the load of the central air-conditioning system through the following formula data: $Q = c \times M_{ch,des} \times (T_{chw,in} - T_{chw,out})$; where, $Q$ is the load of the central air-conditioning system, c is the specific heat of water, $M_{ch,des}$ is the rated flow rate of the chiller in the central air-conditioning system, $T_{chw,in}$ is the chilled water inlet temperature, and $T_{chw,out}$ is the chilled water outlet temperature.

The above-mentioned operating temperature data may include: a chilled water outlet temperature. The above-mentioned operating temperature data acquisition module is configured to obtain the outdoor wet-bulb temperature. The outdoor wet-bulb temperature and the chilled water outlet temperature are inputted into a pre-trained load prediction model, and the load of the central air-conditioning system can be outputted.

The above-mentioned operating temperature data acquisition module is configured to determine the load of

$$Q_{ch,i} = \frac{\frac{1}{\sqrt{S_i}}}{\sum_{i=1}^{k} \frac{1}{\sqrt{S_i}}}$$

each chiller of the central air-conditioning system through the following formula: ; where, $Q_{ch,i}$ is the load of an ith chiller, $S_i$ is the pipe network resistance coefficient of the ith chiller, and k is the total number of chillers in the central air-conditioning system.

The above-mentioned operating state data determination module is configured to obtain an image of the equipment state indicator of the central air-conditioning system collected by the camera equipment, where the operating state of the equipment of the central air-conditioning system corresponds to the color of the equipment state indicator, and perform image recognition on the image to obtain the operating state data of each equipment in the central air-conditioning system.

The above-mentioned camera equipment can be installed on the wall opposite the control cabinets of the central air-conditioning system, or the above-mentioned camera equipment can be installed on the ceiling of the center aisle of the control cabinets of the central air-conditioning system.

The above-mentioned energy efficiency evaluation model may include an energy consumption evaluation sub-model and an energy efficiency evaluation sub- model. The above-mentioned energy efficiency output module is configured to input the load and operating state data of the central air-conditioning system into the pre-trained energy consumption evaluation sub-model and output the energy consumption of the central air-conditioning system under the operating conditions corresponding to its operating state; and/or input the load and energy consumption of the central air-conditioning system into the pre-trained energy efficiency evaluation sub-model and output the energy efficiency of the central air-conditioning system.

The above-mentioned energy efficiency output module is configured to determine the actual power of the chilled water pumps with the energy consumption evaluation sub-model through the following formula:

$$P_{chw} = \sum_{i=1}^{l} P_{chw,des,i} \times N_{chw,i}$$ ; where, $P_{chw}$ is the actual power of the chilled water pumps, $P_{chw,des,i}$ is the rated power of an $i^{th}$-typed chilled water pump, and $N_{chw,i}$ is the number of the $i^{th}$ chilled water pumps in operation, and $l$ is the number of types of chilled water pumps. The energy consumption evaluation sub-model determines the actual power of the condenser water pumps through the following formula: $$P_{cdw} = \sum_{i=1}^{m} P_{cdw,des,i} \times N_{cdw,i}$$ ; where, $P_{cdw}$ is the actual power of the condenser water pumps, the $P_{cdw,des,i}$ is the rated power of an $i^{th}$-typed condenser water pump, and $N_{cdw,i}$ is the number of the $i^{th}$-typed condenser water pumps in operation, and m is the number of types of condenser water pumps. The energy consumption evaluation sub-model determines the actual power of the cooling towers through the following formula: $$P_{ct} = \sum_{i=1}^{n} P_{ct,des,i} \times N_{ct,i}$$ ; where $P_{ct}$ is the actual power of the cooling towers, $P_{et,des,i}$ is the rated power of an $i^{th}$-typed cooling tower; $N_{ct,i}$ is the number of $i^{th}$-typed cooling towers in operation, and $n$ is the number of types of cooling towers. The energy consumption evaluation sub-model determines the actual power of the chillers through the following formula: $$P_{ch} = \sum_{i=1}^{r} f(Q_{ch,i}, T_{wb})$$ ; where $P_{ch}$ is the actual power of the chillers, $Q_{ch,i}$ is the load of an $i^{th}$ chiller, $T_{wb}$ is the outdoor wet-bulb temperature, and $r$ is the number of types of the chillers. The energy consumption evaluation sub-model determines the energy consumption of the central air-conditioning system through the following formula: $P_{sys} = P_{ch} + P_{chw} + P_{cdw} + P_{ct}$. The energy consumption evaluation sub-model determines the energy consumption of the central air-conditioning system under the operating conditions corresponding to the operating state based on the energy consumption and operating state of the central air-conditioning system.

The above energy efficiency output module is configured to determine the energy efficiency of the central air-conditioning system with the energy efficiency evaluation sub-model through the following formula: $$COP_{sys} = \frac{Q}{P_{sys}}$$ ; where $COP_{sys}$ is the energy efficiency of the central air-conditioning system, Q is the load of the central air-conditioning system, and $P_{sys}$ is the energy consumption of the central air-conditioning system.

Referring to the schematic structural diagram of another central air-conditioning system processing apparatus shown in FIG. 11, the central air-conditioning system processing apparatus may also include: a central air-conditioning system adjustment module 1004 connected to the energy efficiency output module 1003. The central air-conditioning system adjustment module 1004 is configured to adjust the operating state of each equipment of the central air-conditioning system if the energy efficiency of the central air-conditioning system is less than a preset threshold.

Those skilled in the art can clearly understand that for the convenience and simplicity of description, for the specific working process of the central air-conditioning system processing apparatus described above, reference can be made to the corresponding process in the aforementioned embodiments of the central air-conditioning system processing method, which are not repeated herein.

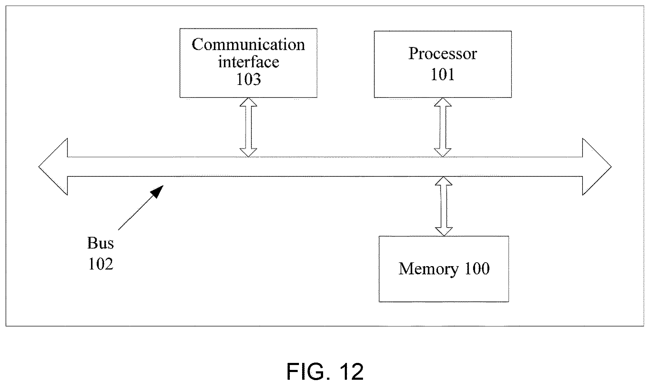

Yet another embodiment of the present application provides an electronic device for running the above central air-conditioning system processing method. Referring to the schematic structural diagram of the electronic device shown in FIG. 12, the electronic device may include a memory 100 and a processor 101. The memory 100 may be configured to store one or more computer instructions, and the one or more computer instructions are executed by the processor 101 to implement the above central air-conditioning system processing method.

Optionally, the electronic device shown in FIG. 12 may also include a bus 102 and a communication interface 103. The processor 101, the communication interface 103 and the memory 100 may be connected through the bus 102.

The memory 100 may include high-speed random access memory (RAM), and may also include non-volatile memory, such as at least one disk memory. The communication connection between the system network element and at least one other network element is realized through at least one communication interface 103 (which can be wired or wireless), such as Internet, wide area network, local network, metropolitan area network, and the like. The bus 102 may be an ISA bus, a PCI bus, an EISA bus, and the like. The bus may be divided into address bus, data bus, control bus, and the like. For ease of presentation, only one bidirectional arrow is shown in FIG. 12, but it does not mean that there is only one bus or one type of bus.

The processor 101 may be an integrated circuit chip with signal processing capabilities. During the implementation process, each step of the above method may be completed by instructions in the form of hardware integrated logic circuits or software in the processor 101. The above-mentioned processor 101 may be a general-purpose processor, including a central processing unit (CPU), a network processor (NP), and the like; it may also be a digital signal processor (DSP), application specific integrated circuit (ASIC), field-programmable gate array (FPGA) or other programmable logic devices, discrete gate or transistor logic devices, and discrete hardware components. Each method, step and logical block diagram disclosed in the embodiment of the present application may be implemented or executed. A general-purpose processor may be a microprocessor or the processor may be any conventional processor, etc. The steps of the method disclosed in conjunction with the embodiments of the present application may be directly implemented by a hardware decoding processor, or executed by a combination of hardware and software modules in the decoding processor. The software module may be located in random access memory, flash memory, read-only memory, programmable read-only memory or electrically erasable programmable memory, registers and other mature storage media in the art. The storage medium may be located in the memory 100, and the processor 101 may read the information in the memory 100, and complete the steps of the method in the aforementioned embodiments in conjunction with its hardware.

Embodiments of the present application also provide a computer-readable storage medium. The computer-readable storage medium can store computer-executable instructions. When the computer-executable instructions are called and executed by a processor, the computer-executable instructions can prompt the processor to implement the above central air-conditioning system processing method. Specific implementation can be referred to the method embodiments and will not be repeated herein.

The computer program products of the central air-conditioning system processing method, apparatus and electronic device provided by the embodiments of the present application may include computer-readable storage media storing program codes. The instructions included in the program codes may be used to execute the methods in the aforementioned method embodiments. Specific implementation can be referred to the method embodiments and will not be repeated herein.

Those skilled in the art can clearly understand that for the convenience and simplicity of description, the specific working process of the system and/or apparatus described above can be referred to the corresponding process in the foregoing method embodiments, and will not be repeated herein.

In addition, in the description of the embodiments of the present application, unless otherwise clearly stated and limited, the terms "installation", "connection" and "connected" should be understood in a broad sense. For example, it can be a fixed connection or a detachable connection., or integrally connected; it can be a mechanical connection or an electrical connection; it can be a direct connection or an indirect connection through an intermediate medium; it can be an internal connection between two components. For those of ordinary skill in the art, the specific meanings of the above terms in the present application can be understood in a specific situation.

If the functions are implemented in the form of software functional units and sold or used as independent products, they can be stored in a computer-readable storage medium. Based on this understanding, the technical proposal of the present application is essentially or the part that contributes to the existing technology or the part of the technical proposal can be embodied in the form of a software product. The computer software product is stored in a storage medium, including Several instructions are used to cause a computer device (which may be a personal computer, a server, or a network device, etc.) to execute all or part of the steps of the methods described in various embodiments of the present application. The aforementioned storage media include: USB, mobile hard disk, read-only memory (ROM), random access memory (RAM), magnetic disk or optical disk and other media that can store program codes.

In the description of the present application, it should be noted that the orientation or positional relationship indicated by the terms "center", "upper", "lower", "left", "right", "vertical", "horizontal", "inner", "outer" is based on the orientation or positional relationship shown in the drawings, which is only for the convenience of describing the present application and simplifying the description and does not indicate or imply that the device or element referred to must have a specific orientation, or is constructed and operated in a specific orientation, and therefore should not be construed as limitations on the present application. Furthermore, the terms "first", "second" and "third" are used for descriptive purposes only and are not to be construed as indicating or implying relative importance.

Finally, it should be noted that the above-mentioned embodiments are only specific implementation modes of the present application, and are used to illustrate the technical proposals of the present application, but not to limit them. The protection scope of the present application is not limited thereto. Although the present application is described in detail with reference to the foregoing embodiments, those of ordinary skill in the art should understand that any person familiar with the technical field can still modify the technical proposals in the foregoing embodiments within the technical scope disclosed in the present application. It is possible to easily envisage changes, or to make equivalent substitutions for some of the technical features; and these modifications, changes or substitutions do not cause the essence of the corresponding technical proposals to deviate from the spirit and scope of the technical proposals of the embodiments of the present application, and they should all fall within the scope of protection of the present application. Therefore, the protection scope of the present application should be defined by the protection scope of the appended claims.

**Industrial applicability**

The present application provides a central air-conditioning system processing method, apparatus and electronic device. The method includes: obtaining operating temperature data of the central air-conditioning system, and determining a load of the central air-conditioning system based on the operating temperature data; determining operating state data of each equipment in the central air-conditioning system; inputting the load and the operating state data of the central air-conditioning system in an energy efficiency evaluation model, and outputting the energy consumption and/or energy efficiency of the central air-conditioning system. In this method, the rated parameters of the equipment and a limited amount of collected data are used to more accurately evaluate the energy efficiency level of the air-conditioning system, thereby improving the accuracy of the energy efficiency calculation of the central air-conditioning system.

In addition, it can be understood that the central air-conditioning system processing method, apparatus and electronic device of the present application are reproducible and can be applied in a variety of industrial applications. For example, the central air-conditioning system processing method of the present application can be applied to the field of air conditioners.

**Claims**

1.  A method for central air-conditioning system processing, comprising:

    obtaining operating temperature data of a central air-conditioning system, and determining a load of the central air-conditioning system based on the operating temperature data;
    determining operating state data of each equipment in the central air-conditioning system; and
    inputting the load and the operating state data of the central air-conditioning system into an energy efficiency evaluation model, and outputting an energy consumption and/or energy efficiency of the central air-conditioning system.

2.  The method according to claim 1, wherein a heat meter is provided on a chilled water main pipe of the central air-conditioning system, and the step of obtaining the operating temperature data of the central air-conditioning system comprises: obtaining the operating temperature data of the central air-conditioning system acquired by the heat meter.

3.  The method according to claim 2, wherein the heat meter is an ultrasonic heat meter.

4.  The method according to claim 1, wherein a building in which the central air-conditioning system is installed is equipped with a building management system; and the step of obtaining the operating temperature data of the central air-conditioning system comprises: obtaining the operating temperature data of the central air-conditioning system acquired by the building management system.

5.  The method according to any one of claims 1 to 4, wherein the operating temperature data comprises: a chilled water inlet temperature and a chilled water outlet temperature; and the step of determining the load of the central air-conditioning system based on the operating temperature data comprises:

    determining the load of the central air-conditioning system through the following formula: $Q = c \times M_{ch,des} \times (T_{chw,in} - T_{chw,out})$;
    wherein, $Q$ is the load of the central air-conditioning system, c is a specific heat of water, $M_{ch,des}$ is a rated flow rate of chillers in the central air-conditioning system, $T_{chw,in}$ is the chilled water inlet temperature, and $T_{chw,out}$ is the chilled water outlet temperature.

6.  The method according to any one of claims 1 to 4, wherein the operating temperature data comprises a chilled water outlet temperature; and the step of determining the load of the central air-conditioning system based on the operating temperature data comprises:

    obtaining an outdoor wet-bulb temperature; and
    inputting the outdoor wet-bulb temperature and the chilled water outlet temperature into a load prediction model, and outputting the load of the central air-conditioning system.

7. The method according to any one of claims 1 to 4, wherein the step of determining the load of the central air-conditioning system based on the operating temperature data comprises:
determining a load of each chiller in the central air-conditioning system through the following formula:

$$Q_{ch,i} = \frac{\frac{1}{\sqrt{s_i}}}{\sum_{i=1}^{k} \frac{1}{\sqrt{s_i}}}$$

; wherein, $Q_{ch,i}$ is a load of an $i^{th}$ chiller, $s_i$ is a pipe network resistance coefficient of the $i^{th}$ chiller, and k is a total number of chillers in the central air-conditioning system.

8. The method according to any one of claims 1 to 7, wherein the step of determining the operating state data of each equipment in the central air-conditioning system comprises:

obtaining an image of an equipment state indicator of the central air-conditioning system acquired by a camera equipment, wherein an operating state of each equipment corresponds to a color of the equipment state indicator; and
performing an image recognition process on the image to obtain the operating state data of each equipment in the central air-conditioning system.

9. The method according to claim 8, wherein electromechanical equipment of the central air-conditioning system is equipped with high-voltage control cabinets, and the equipment state indicator is installed on a door of each of the control cabinets.

10. The method according to claim 8, wherein the camera equipment is installed on a wall opposite the control cabinet of the central air-conditioning system, or, the camera equipment is installed on a ceiling of a center aisle of the control cabinet of the central air-conditioning system.

11. The method according to any one of claims 1 to 4, wherein the energy efficiency evaluation model comprises an energy consumption evaluation sub-model and an energy efficiency evaluation sub-model; and the step of inputting the load and operating state data of the central air-conditioning system into the energy efficiency evaluation model, and outputting the energy consumption and/or energy efficiency of the central air-conditioning system comprises:

inputting the operating state data of the central air-conditioning system into the energy consumption evaluation sub-model, and outputting the energy consumption of the central air-conditioning system under operating conditions corresponding to the operating state;
and/or, inputting the load and the energy consumption of the central air-conditioning system into the energy efficiency evaluation sub-model, and outputting the energy efficiency of the central air-conditioning system.

12. The method according to claim 11, wherein the step of inputting the operating state data of the central air-conditioning system into the energy consumption evaluation sub-model, and outputting the energy consumption of the central air-conditioning system under the operating conditions corresponding to the operating state comprises:

determining an actual power of chilled water pumps by the energy consumption evaluation sub-model through the following formula: $P_{chw} = \sum_{i=1}^{l} P_{chw,des,i} \times N_{chw,i}$ ; wherein, $P_{chw}$ is an actual power of the chilled water pumps, $P_{chw,des,i}$ is a rated power of $i^{th}$-typed chilled water pumps, $N_{chw,i}$ is a number of the $i^{th}$-typed chilled water pumps in operation, and I is a number of types of the chilled water pumps;
determining an actual power of condenser water pumps by the energy consumption evaluation sub-model through the following formula: $P_{cdw} = \sum_{i=1}^{m} P_{cdw,des,i} \times N_{cdw,i}$ ; wherein, $P_{cdw}$ is an actual power of the condenser water pumps, $P_{cdw,des,i}$ is a rated power of $i^{th}$-typed condenser water pumps, $N_{cdw,i}$ is a number of the $i^{th}$-typed condenser water pumps in operation, and m is a number of types of the condenser water pumps;
determining an actual power of cooling towers by the energy consumption evaluation sub-model through the following formula: $P_{ct} = \sum_{i=1}^{n} P_{ct,des,i} \times N_{ct,i}$ , wherein, $P_{ct}$ is an actual power of the cooling towers, $P_{ct,des,i}$ is a rated power of $i^{th}$-typed cooling towers, $N_{ct,i}$ is a number of the $i^{th}$-typed cooling towers in operation, and n is a number of types of the cooling towers;
determining an actual power of the chillers by the energy consumption evaluation sub-model through the following formula: $P_{ch} = \sum_{i=1}^{r} f(Q_{ch,i}, T_{wb})$ , wherein, $P_{ch}$ is an actual power of the chillers, $Q_{ch,i}$ is a load of an $i^{th}$ chiller; $T_{wb}$ is the outdoor wet-bulb temperature, and r is a number of types of the chillers;
determining the energy consumption of the central air-conditioning system by the energy consumption evaluation sub-model through the following formula:

$$P_{sys} = P_{ch} + P_{chw} + P_{cdw} + P_{ct};$$

and
determining the energy consumption of the central air-conditioning system under the operating conditions corresponding to the operating state by the energy consumption evaluation sub-model based on the energy consumption and operating state of the central air-conditioning system.

13. The method according to claim 11, wherein the step of inputting the load and the energy consumption of the central air-conditioning system into the energy efficiency evaluation sub-model, and outputting the energy efficiency of the central air-conditioning system comprises:

the energy efficiency evaluation sub-model through the following formula: $COP_{sys} = \frac{Q}{P_{sys}}$ ; wherein, $COP_{sys}$ is the energy efficiency of the central air-conditioning system, $Q$ is the load of the central air-conditioning system, and $P_{sys}$ is the energy consumption of the central air-conditioning system.

14. The method according to any one of claims 1 to 13, wherein after the step of outputting the energy consumption and the energy efficiency of the central air-conditioning system, the method further comprises:
adjusting, if the energy efficiency of the central air-conditioning system is less than a preset threshold, the operating state of each equipment in the central air-conditioning system.

15. A central air-conditioning system processing apparatus, comprising:

An operating temperature data acquisition module, configured to obtain operating temperature data of the central air-conditioning system, and determine a load of the central air-conditioning system based on the operating temperature data;
an operating state data determination module, configured to determine operating state data of each equipment in the central air-conditioning system; and
an energy efficiency output module, configured to input the load and the operating state data of the central air-conditioning system into an energy efficiency evaluation model and output energy consumption and/or energy efficiency of central air-conditioning system.

16. An electronic device, comprising a processor and a memory, wherein the memory stores a computer-executable instruction that can be executed by the processor, and the processor executes the computer-executable instruction to implement a method for central air-conditioning system processing according to any one of claims 1 to 14.

17. A computer-readable storage medium, wherein the computer-readable storage medium stores a computer-executable instruction, and the computer-executable instruction, when called and executed by a processor, prompts the processor to any one of claims 1 to 14.

obtaining operating temperature data of the central air-conditioning system, and determining a load of the central air-conditioning system based on the operating temperature data

S102

determining operating state data of each equipment in the central air-conditioning system

S104

inputting the load and the operating state data of the central air-conditioning system into an energy efficiency evaluation model, and outputting an energy consumption and/or energy efficiency of the central air-conditioning system

S106

FIG. 1

obtaining operating temperature data of the central air-conditioning system, and determining a load of the central air-conditioning system based on the operating temperature data

S202

determining operating state data of each equipment in the central air-conditioning system

S204

inputting the load and the operating state data of the central air-conditioning system into an energy efficiency evaluation model, and outputting an energy consumption and/or energy efficiency of the central air-conditioning system

S206

adjusting, if the energy efficiency of the central air-conditioning system is less than a preset threshold, the operating state of each equipment in the central air-conditioning system

S208

FIG. 2

flow direction

returned water
temperature sensor

supplied water
temperature sensor

flow direction

FIG. 3

distribution
manifold

bypass
valve

return
manifold

chiller 1

chilled water
pump 1

chiller 2

chilled water
pump 2

FIG. 4

FIG. 5

equipment control cabinet

network camera

FIG. 6

equipment control cabinet

aisle

network camera

equipment control cabinet

FIG. 7

FIG. 8

FIG. 9

Operating temperature data
acquisition module
1001

Operating state data
determination module
1002

Energy efficiency output
module
1003

FIG. 10

Operating temperature data
acquisition module
1001

Operating state data
determination module
1002

Energy efficiency output
module
1003

Central air-conditioning
system adjustment module
1004

FIG. 11

FIG. 12

## INTERNATIONAL SEARCH REPORT

| International application No. |
|---|
| **PCT/CN2022/091246** |

| **A.** | **CLASSIFICATION OF SUBJECT MATTER** |
|---|---|

F24F 11/00(2018.01)i

According to International Patent Classification (IPC) or to both national classification and IPC

| **B.** | **FIELDS SEARCHED** |
|---|---|

Minimum documentation searched (classification system followed by classification symbols)

F24F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; DWPI; WPABSC; ENTXTC: 李元阳, 方兴, 王聪, 黄漫宁, 梁锐, 阎杰, 美的, 上海美控智慧建筑有限公司, 中央空调, 能效, 能耗, 负荷, 冷却水, 冷冻水, energy 4d consumption, energy 4d efficiency, cold 4d water?, cool+ 4d water, central 3d air 3d condition+

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 107314498 A (CHINA AGRICULTURAL UNIVERSITY) 03 November 2017 (2017-11-03) description, paragraphs 20-173, and figures 1-2 | | 1-17 |
| X | CN 111027181 A (GUANGXI POWER GRID CO., LTD.) 17 April 2020 (2020-04-17) description, paragraphs 80-158, and figures 1-5 | | 1-17 |
| PX | CN 113654215 A (SHANGHAI MEIKONG SMART BUILDING CO., LTD. et al.) 16 November 2021 (2021-11-16) claims 1-16, and description, paragraphs 1-137, and figures 1-12 | | 1-17 |
| A | JP S63-231133 A (HITACHI LTD.) 27 September 1988 (1988-09-27) entire document | | 1-17 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2022** | **17 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/091246**

| Patent document cited in search report | | | Publication date (day/month/year) | Patent family member(s) | Publication date (day/month/year) |
|---|---|---|---|---|---|
| CN | 107314498 | A | 03 November 2017 | None | |
| CN | 111027181 | A | 17 April 2020 | None | |
| CN | 113654215 | A | 16 November 2021 | None | |
| JP | 昭63-231133 | A | 27 September 1988 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111034255